(19) **Europäisches Patentamt / European Patent Office / Office européen des brevets**

(11) **EP 2 260 403 B1**

(12) **EUROPEAN PATENT SPECIFICATION**

(45) Date of publication and mention of the grant of the patent:
**01.03.2017 Bulletin 2017/09**

(51) Int Cl.:
**G06F 15/177** (2006.01)  **G06T 17/20** (2006.01)

(21) Application number: **08872600.5**

(22) Date of filing: **16.09.2008**

(86) International application number:
**PCT/US2008/076547**

(87) International publication number:
**WO 2009/105126 (27.08.2009 Gazette 2009/35)**

(54) **MESH TRANSFER**

MESH-TRANSFER

TRANSFERT DE MAILLE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **22.02.2008 US 30796 P**
**28.08.2008 US 200704**
**28.08.2008 US 200719**
**28.08.2008 US 200727**
**28.08.2008 US 200739**

(43) Date of publication of application:
**15.12.2010 Bulletin 2010/50**

(73) Proprietor: **PIXAR**
**Emeryville, CA 94608 (US)**

(72) Inventors:
- **DEROSE, Tony**
  **San Rafael, California 94901 (US)**
- **MEYER, Mark**
  **San Francisco, California 94158 (US)**
- **BAKSHI, Sanjay**
  **Piedmont CA 94611-4356 (US)**
- **SANOCKI, Tom**
  **Berkeley, California 94710 (US)**

- **GREEN, Brian**
  **Walnut Creek, California 94597 (US)**

(74) Representative: **Round, Edward Mark et al**
**Marks & Clerk LLP**
**90 Long Acre**
**London WC2E 9RA (GB)**

(56) References cited:
**WO-A2-2007/087445     US-A1- 2007 176 923**

- **FRATARCANGELI ET AL: "Facial motion cloning with radial basis functions in MPEG-4 FBA", GRAPHICAL MODELS, ELSEVIER, SAN DIEGO, CA, US, vol. 69, no. 2, 3 February 2007 (2007-02-03), pages 106-118, XP005866954, ISSN: 1524-0703, DOI: 10.1016/J.GMOD.2006.09.006**
- **KAHLER ET AL.,: 'Head Shop: Generating Animated Head Models With Anatomical Structure' PROCEEDINGS OF THE 2002 ACM SIGGRAPH/EUROGRAPHIC SYMPOSIUM ON COMPUTER ANIMATION, YEAR OF PUBLICATION 2002, [Online] 09 November 2008, XP008141249 Retrieved from the Internet: <URL:http://www.mpi-inf.mpg.delresources/FAM/publ/sca2002.pdf>>**

**Description**

CROSS-REFERENCES TO RELATED APPLICATIONS

This application claims priority to and the benefit of U.S. Provisional Patent Application No. 61/030,796, filed February 22, 2008 and entitled "Transfer of Rigs with Temporal Coherence;" U.S. Patent Application No. 12/200,704, filed August 28, 2008 and entitled "Mesh Transfer;" U.S. Patent Application No. 12/200,719, filed August 28, 2008 and entitled "Mesh Transfer Using UV-Space;" U.S. Patent Application No. 12/200, 727, filed August 28, 2008 and entitled "Mesh Transfer in N-D Space;" and U.S. Patent Application No. 12/200,739, filed August 28, 2008 and entitled "Mesh Transfer for Shape Blending," the entire respective disclosures of which are incorporated herein by reference in their entirety for all purposes.

BACKGROUND

This disclosure relates to computer animation and computer generated imagery. More specifically, this disclosure related to techniques for transferring information from one computer model to another.

With the wide-spread availability of computers, animators and computer graphics artists can rely upon computers to assist in the animation and computer generated imagery process. This may include using computers to have physical models be represented by virtual models in computer memory. This may also include using computers to facilitate animation, for example, by the designing, posing, deforming, coloring, painting, or the like, of characters or other elements of a computer animation display.

Pioneering companies in the computer-aided animation / computer generated imagery (CGI) industry can include Pixar. Pixar is more widely known as Pixar Animation Studios, the creators of animated features such as "Toy Story" (1995) and "Toy Story 2" (1999), "A Bugs Life" (1998), "Monsters, Inc." (2001), "Finding Nemo" (2003), "The Incredibles" (2004), "Cars" (2006), "Ratatouille" (2007), and others. In addition to creating animated features, Pixar develops computing platforms specially designed for computer animation and CGI, now known as RenderMan®. RenderMan® is now widely used in the film industry and the inventors have been recognized for their contributions to RenderMan® with multiple Academy Awards®.

One core functional aspect of RenderMan® software can include the use of a "rendering engine" to convert geometric and/or mathematical descriptions of objects or other models into images. This process is known in the industry as "rendering." For movies or other features, a user (e.g., an animator or other skilled artist) specifies the geometric description of a model or other objects, such as characters, props, background, or the like that may be rendered into images. An animator may also specifying poses and motions for objects or portions of the objects. In some instances, the geometric description of objects may include a number of animation variables (avars), and values for the avars.

The production of animated features and CGI may involve the extensive use of computer graphics techniques to produce a visually appealing image from the geometric description of an object or model that can be used to convey an element of a story. One of the challenges in creating models for use in animated features can be balancing the desire for a visually appealing image of a character or other object with the practical issues involved in allocating the computational resources required to produce those visually appealing images. Often the geometric descriptions of objects or models at various stages in a feature film production environment may be rough and course, lacking the realism and detail that would be expected of the final production.

One issue with the production process is the time and effort involved when an animator undertakes to create the geometric description of a model and the models associated avars, rigging, shader variables, paint data, or the like. Even with models that lack the detail and realism expected of the final production, it may take several hours to several days for an animator to design, rig, pose, paint, or otherwise prepare the model for a given state of the production process. Further, although the model need not be fully realistic at all stages of the production process, it can be desirable that the animator or artist producing the model be able to modify certain attributes of the model at any stage. However, modifying the model during the production process may also involved significant time and effort. Often, there may not be sufficient time for desired modifications in order to maintain a release schedule.

Accordingly, what is desired is to solve problems relating to transferring information between meshes, some of which may be discussed herein. Additionally, what is desired is to reduce drawbacks related to transferring information between meshes, some of which may be discussed herein.

SUMMARY

In various embodiments, data and other information from one model can be transferred to another model. A correspondence between meshes of the models can be created that provides a transfer or sharing of information to include all points of one mesh and all points of the other mesh. Mesh information and other proximity data from the mesh of one model can be "pushed through" the correspondence to transfer the data to its designated location at the mesh of the other model.

The correspondence between each of the meshes can enable animators and other digital artists to create new characters from existing characters that may have different topologies and geometries. Additionally, the correspondence may be created between different versions of the same character, thereby allowing the animator to implement changes to characters at later stages of the production process and transfer information from prior versions thereby preserving previous work product and reducing the time and cost of updating the characters.

In some embodiments, correspondences for sharing or transferring information between meshes can be generated based on a pair of feature curve networks. A correspondence can be authored on a source mesh by drawing or placing one or more geometric primitives (e.g., points, lines, curves, volumes, etc.) at the source mesh and corresponding geometric primitives at a destination mesh. For example, a collection of "feature curves" may be placed on each of the source and destination meshes to partition the source and destination meshes into a collection of "feature regions" at "features" or other prominent aspects of the model, such as eyes, noses, or lips. The resulting partitions forming "feature curve networks" can be used to construct a full correspondence between all points of the source mesh and all points of the destination mesh.

In further embodiments, feature curve networks forming the resulting partitions may be different from three sided polygons (e.g., different from triangles), which may commonly be used to create meshes. At least one region associated with the source mesh or the destination mesh may be bounded by more than three feature curves in the pair of feature curve networks. At least one region associated with the source mesh or the destination mesh may be bounded by less than three feature curves in the pair of feature curve networks. The correspondence may be generated based on the pair of feature curve networks where regions associated with the source mesh or the destination mesh are bounded by less than three or more than three feature curves.

In some embodiments, at least one feature curve may be defined by at least one point that lies within the interior of a face associated with either the source mesh or the destination mesh. A pair of feature curve networks may include one or more user-defined feature curves. Feature curves associated with a pair of feature curve networks may be inferred from other parameterizations of a source or destination mesh.

In various embodiments, at least a portion of the pair of feature curve networks may be created based on parameterization information associated with one or more of the meshes. The parameterization information may include UV sets, one or more maps, harmonic parameterizations, or other information from which discontinuities may be inferred. In one embodiment, the correspondence may be generated by created one or more maps.

In further embodiments, the surface correspondence between one model and another model may be used to generate a volume correspondence. A volume correspondence may be generated based on a pair of surfaces and at least one additional pair of surfaces from which a volume or other n-D space can be defined. The resulting volume correspondence can be used to share or transfer information between all points within a volume or other n-D space defined for a source model and all points within a corresponding volume or other n-D space defined for a destination model. In at least one embodiment, the volume correspondence can be built using a harmonic deformation correspondence.

A volume correspondence in some embodiments can be authored on a source model by a user drawing or placing one or more corresponding feature curves on a source mesh and a destination mesh. The user may draw or place corresponding pairs of surfaces external to the models or within the models to define a volume of other n-D space. The volume correspondence may be generated in response to the corresponding feature curves on the source and destination meshes and the corresponding pairs of surfaces that define the volume or other n-D space.

In various embodiments, data and other information of models can be shared to be combined to create new models or update features of existing models. A correspondence between pairs of meshes in a collection of meshes can be created. The correspondences may enable an animator or artist to share, blend, or combine information from a plurality of meshes. Mesh information and other data at, near, or otherwise associated with the models can be "pushed through" the correspondences and combined or blended with information from other models.

In various embodiments, difference information between a plurality of meshes may be determined based on the correspondence. The difference information may be stored. For example, the difference information may generated and stored as a bump map. Alternatively, the difference between a set of meshes may be determined and information indicative of the difference may be generated and stored as a set of wavelet coefficients.

In still further embodiments, a correspondence between a source mesh and a destination mesh can be created or generated based on one or more harmonic functions. The correspondence may be generated such that data corresponding to a first point at or near the source mesh may be shared or transferred to a second point at or near destination mesh. The information sharing between two or more meshes may unidirectional or bidirectional based on the correspondence. Thereby, information may be shared between two or more meshes, such as scalar fields, variables, controls, avars, articulation data, character rigging, shader data, lighting data, paint data, simulation data, topology and/or geometry, re-meshing information, map information, or the like.

In one embodiment, a computer-implemented method may be provided for generating correspondences for transferring information between objects. A first mesh or mesh object may be created, loaded, or otherwise received. A second mesh or mesh object may be created, loaded, or otherwise received. A pair of feature curve networks then may be created or received. At least one region of the first mesh or at least one region of the second mesh may be bounded by more than three or less than three feature curves in the pair of feature curve networks. A correspondence between the first and second meshes may then be generated or otherwise established based on the pair of feature curve networks.

In yet another embodiment, a correspondence may be generated between the first mesh and the second mesh using one or more harmonic functions. In a further embodiment, a correspondence may be generated based on a pair of feature curve networks where at least one feature curve in the pair of feature curve networks is defined by a point that lies in the interior of a face associated with one of a first mesh or a second mesh.

A further understanding of the nature, advantages, and improvements offered by those inventions disclosed herein may be realized by reference to remaining portions of this disclosure and any accompanying drawings.

BRIEF DESCRIPTION OF THE DRAWINGS

In order to better describe and illustrate embodiments and/or examples of any inventions presented within this disclosure, reference may be made to one or more accompanying drawings. The additional details or examples used to describe the accompanying drawings should not be considered as limitations to the scope of any of the disclosed inventions, any of the presently described embodiments and/or examples, or the presently understood best mode of any invention presented within this disclosure.

FIG. 1 is a simplified block diagram of a system for creating computer animations and computer graphics imagery that may implement or incorporate various embodiments of an invention whose teachings may be presented herein;

FIG. 2 is an illustration of a mesh for a head of a human character;

FIG. 3A is an illustration a mesh including various pieces of associated information;

FIG. 3B is an illustration of a mesh in various embodiments with which information associated with the mesh of FIG. 3A may be shared;

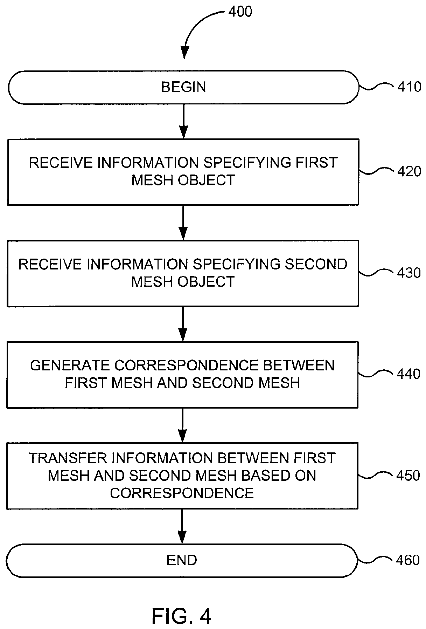

FIG. 4 is a simplified flowchart of a method in various embodiments for generating a correspondence between meshes for sharing information between the meshes;

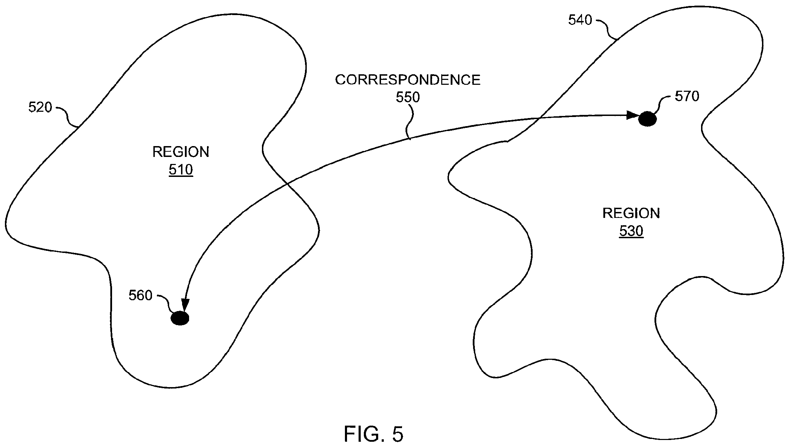

FIG. 5 is an illustration of a correspondence between a first region and a second region in some embodiments;

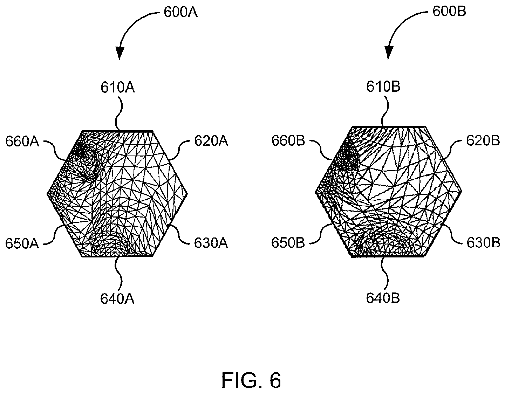

FIG. 6 illustrates a first mesh region and a corresponding second mesh region parameterized over a regular hexagon in one embodiment;

FIG. 7 is a flowchart of a method in various embodiments for transferring information between meshes using feature curve networks;

FIGS. 8A and 8B illustrate a mesh including a feature curve network having less than three feature curves that define a region;

FIGS. 9A and 9B illustrate a mesh including a feature curve network having more than three feature curves that define a region;

FIG. 10 is a flowchart of a method in various embodiments for generating a correspondence based on refinements to pair of feature curve networks;

FIGS. 11A and 11B illustrate interior constraints within two corresponding regions in one embodiment;

FIG. 12 is a flowchart of a method in various embodiments for generating a correspondence between meshes based on parameterization information for sharing information between the meshes;

FIG. 13 is a flowchart of a method in various embodiments for generating a correspondence between meshes based on UV sets;

FIGS. 14A and 14B illustrate a model and its corresponding UV map in one embodiment;

FIG. 15 is a simplified flowchart of a method in various embodiments for generating a volume correspondence between meshes for sharing information between the meshes;

FIG. 16 is an illustration of a volume correspondence between a first volume and a second volume in some embodiments;

FIG. 17 illustrates a first mesh and a corresponding second mesh for transferring hair styles in one embodiment;

FIG. 18 is a simplified flowchart of a method in various embodiments for shape blending;

FIG. 19 is a block diagram of a collection of meshes in one embodiment;

FIG. 20 is a block diagram illustrating blending of topology information and geometry information in one embodiment;

FIGS. 21A, 21B, and 21C illustrate a collection of meshes and a resultant blend in one embodiment; and

FIG. 22 is a block diagram of a block diagram of a computer system or information processing device that may be used to implement or practice various embodiments of an invention whose teachings may be presented herein.

## DETAILED DESCRIPTION OF EXEMPLARY EMBODIMENTS

Techniques and tools can be implemented that assist in the production of computer animation and computer graphics imagery. A mesh can be the structure that gives shape to a model. The mesh of a model may include, in addition to information specifying vertices and edges, various additional pieces of information. In various embodiments, point weight groups, shader variables, articulation controls, hair variables and styles, paint data, or the like, can be shared between meshes having different topologies and geometries. Information associated with the mesh of one character can be shared with or transferred to the mesh of another character, even from one character to another completely different character and between different versions of the same character.

A correspondence build between a source mesh and a destination mesh can provide the sharing of information on, at, or near one mesh to designated locations of another mesh. The correspondence may be constructed between all points on surfaces of the meshes, rather than merely mesh vertices alone. In various embodiments, the correspondences may be authored by drawing out points, lines, curves, etc. on a source mesh and associated points, lines, curves, etc. on a destination mesh. These may correspond to features or other prominent aspects of models provide by the meshes. Regions created by authoring on the meshes can be parameterized such that a full correspondence is created between all points of the source mesh and all points of the destination mesh, without requiring identical topologies and/or geometries.

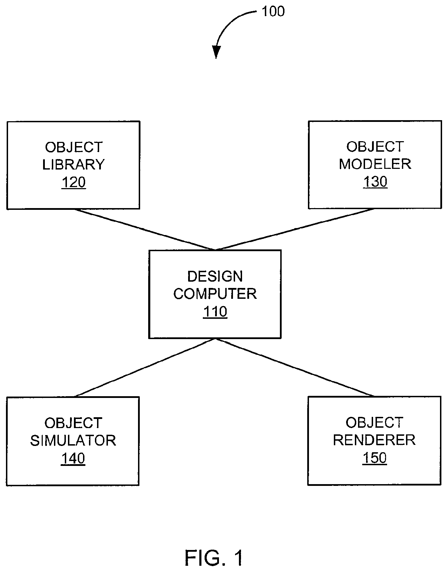

FIG. 1 is a simplified block diagram of system 100 for creating computer animations and computer graphics imagery that may implement or incorporate various embodiments of an invention whose teachings may be presented herein. In this example, system 100 includes design computer 110, object library 120, object modeler 130, object simulator 140, and object render 150.

Design computer 110 can be any PC, laptop, workstation, mainframe, cluster, or the like. Object library 120 can be any database configured to store information related to objects that may be designed, posed, animated, simulated, rendered, or the like.

Object modeler 130 can be any hardware and/or software configured to model objects. Object modeler 130 may generate 2-D and 3-D object data to be stored in object library 120. Object simulator 140 can be any hardware and/or software configured to simulate objects. Object simulator 140 may generate simulation data using physically-based numerical techniques. Object renderer 150 can be any hardware and/or software configured to render objects. For example, object renderer 150 may generate still images, animations, motion picture sequences, or the like of objects stored in object library 120.

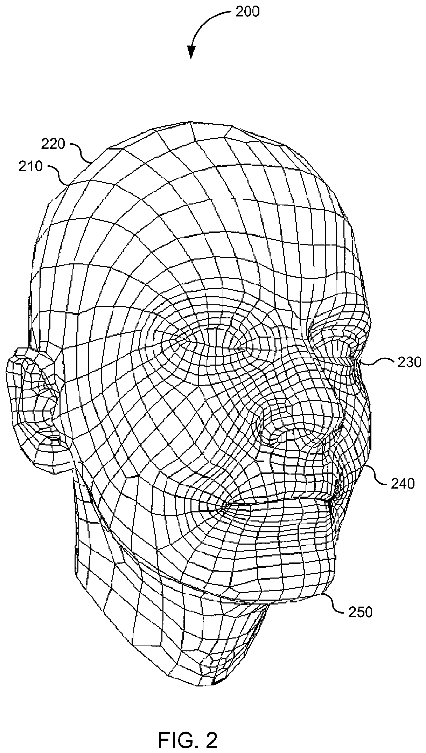

FIG. 2 is an illustration of mesh 200 for a head of a human character model in one embodiment. Mesh 200 can be created or modeled as a collection of faces (e.g., triangles, quadrilaterals, or other polygons), formed by interconnecting a collection of vertices. In this example, a collection of polygons interconnect at vertex 210. Polygons may interconnect at vertex 210 to share an edge (e.g., edge 220). Any number of polygons and vertices may be used to form mesh 200. The number of polygons may be dependent on user preference, the desired topology, geometry, realism, detail, or the like.

Motion of a model associated with mesh 200 may be realized by controlling mesh 200, for example by controlling vertices 230, 240, and 250. Polygons and vertices of mesh 200 may be individually animated by moving their location in space (x, y, z) for each displayed frame of a computer animation. Polygons and vertices of mesh 200 may also move together as group, maintaining constant relative position. Thus, for example, by raising vertices of mesh 200 by appropriate amounts at the corners of lips on the head of the human character, a smiling expression can be formed. Similarly, vertices of mesh 200 located at or near features or other prominent aspects of the model created by mesh 200, such as eyebrows, cheeks, forehead, etc. may be moved to deform the head of the human character to form a variety of expressions.

In addition to controlling character deformations, information can be "attached to" mesh 200 to provide other functional and/or decorative purposes. For example, mesh 200 may be connected to skeletons, character rigging, or other animations controls and avars used to animate, manipulate, or deform the model via mesh 200. Further, fields of data and/or variables specifying color, shading, paint, texture, etc. can be located at certain vertices or defined over surfaces of mesh 200. As discussed above, constructing mesh 200 and placing all of this information on mesh 200 can be a time consuming process. This process may limit how many characters or other objects maybe created, the topologies and geometries of those models, and what changes can be made during various stages in the production of animations, such as feature-length films.

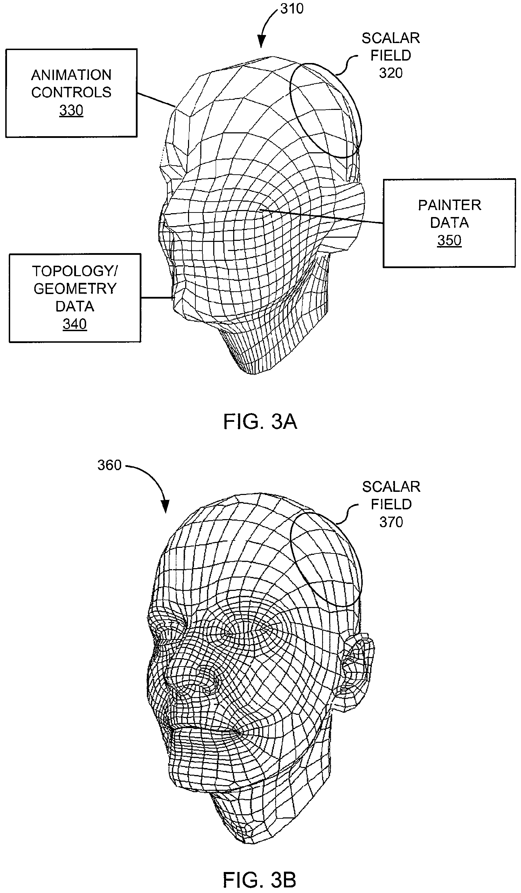

FIG. 3A is an illustration mesh 310 including various pieces of associated information. Mesh 310 can include scalar field 320, animations controls 330, topology/geometry data 340, and painter data 350. Scalar field 320 may include a distribution of values or variables over a portion of mesh 310. The values or variables associated with scalar field 320 may include shader variables, point weight groups, the location of hair/fur objects, or the like. Topology/geometry data 340 may include information that defines or describes a locality in terms of its layout, structure, or level of detail. Painter data 350 may include information, such as coloring and textures, placed by an animator or designer at a specific location on mesh 310.

In various embodiments, new models can be created and existing models can be more readily updated using techniques of this disclosure that allow animators to overcome some of the timing constraints involved in creating models. Additionally, the time and effort put into designing one model can be preserved allowing the prior work and effort performed by the animator to be shared with or copied to another model. In some embodiments, a correspondence can be created that allows information present at or on a mesh to be shared with another mesh. The correspondence can reduce the time required to create new models, or the update existing models at later stages of the production process. Thus, animation controls, rigging, shader and paint data, etc. can be authored once on a character, and shared or transferred to different version of the same character or to another character of completely different topology and geometry.

In the example of FIG. 3A, mesh 310 may represent an initial or preliminary version of a character. For example, mesh 310 may include a number of polygons that provide a character with just enough detail with which an animator, designer, or other graphics artist may work. The number of polygons may be relatively small compared to the number of polygons for a final or production version of the character having lifelike or the final desired detail and/ or realism. The relatively small size of mesh 310 may allow the character associated with mesh 310 to be quickly posed, animated, rigged, painted, or rendered in real-time, allowing an animator to see quick results early in production process.

Referring to FIG. 3B, mesh 360 may represent a production or final version of the character. Mesh 360 may include a relatively higher or larger number of polygons with respect to initial or preliminary versions of the character to provide more realistic detail in each rendered frame. In this example, mesh 360 can include scalar field 370. Scalar field 370 may be identical to, similar to, or otherwise include some relationship with scalar field 320. For example, both may represent how the head of the character is to be shaded or how hair is to be placed.

In various embodiments, one or more correspondences may be created that allow information associated with mesh 310 to be readily shared with or transferred to mesh 360. Scalar field 320, animations controls 330, topology/geometry data 340, and/or painter data 350 can be "pushed" through a correspondence between mesh 310 and mesh 360. For example, scalar field 320 can be transferred to mesh 360 to create scalar field 370. Thus, once correspondences are created between meshes, any information at or on one mesh may be shared with another mesh. This can allow sharing of information even if one mesh includes differing topologies and geometries from other meshes.

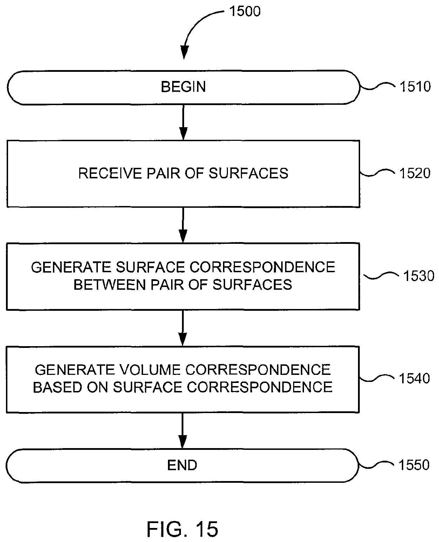

FIG. 15 is a simplified flowchart of method 1500 in various embodiments for generating a correspondence between meshes for sharing information between the meshes. The processing depicted in FIG. 15 may be performed by software modules (e.g., instructions or code) executed by a processor of a computer system, by hardware modules of an electronic device, or combinations thereof. FIG. 15 begins in step 1510.

In step 1520, information is received specifying a first mesh. The information may define the first mesh to include a single integral mesh or to include a collection of connected meshes. As discussed above, the first mesh may include a collection of polygons, interconnected at vertices, that form the topology and/or geometry of a model. The information may further specify variables, controls, fields, rigging, color/lighting data, or the like.

In step 1530, information is received specifying a second mesh. The second mesh may have the same or different topology or geometry of the first mesh. For example, the second mesh may include the same number of polygons as the first mesh, a different number of polygons, different types of polygons, or the like. The second mesh may already include mesh information, such as character rigging, scalar fields, shader variables, or the like.

In step 1540, a correspondence is generated between the first mesh and the second mesh. The correspondence can include functions, relationships, correlations, etc. between one or more points associated with the first mesh and one or more points associated with the second mesh. The correspondence may include a mapping from every location on or within a space near the first mesh to a unique location on or near the second mesh. The correspondence may map one or more points, curves, surfaces, regions, objects, or the like, associated with the first object to one or more points, curves, surfaces, regions, objects, or the like associated with the second object.

In various embodiments, a parameterization is built for source and destination meshes over a common domain. This common parameter domain can then be used to build a global and continuous correspondence between all points of the source and destination surfaces. The basic framework of the parameterization may rely on user-supplied points, user-supplied curves, inferred discontinuities, or the like. In some embodiments, the parameterization may include a set of feature curves defining a feature curve network.

In step 1550, information is transferred between the first mesh and the second mesh based on the correspondence. The information may include character rigging, topology data, geometry data, shader variables, hair objects, information or objects within a proximity to either mesh, painter data, or the like. The transfer may occur from the first mesh to the second mesh. The transfer may also occur from the second mesh to the first mesh.

The creation of correspondences between meshes, and the transfer of information can be applied to a range of applications. For example, information may be shared between characters. As mentioned above, without requiring a common mesh topology, sharing can be accomplished between meshes with far more topological flexibility. In another example, the flexibility of evolving characters may be achieved. As the design of a character evolves, the geometry and mesh topology of the character may change. Even in early stages of a production, such changes can be expensive since point weight groups, shader variables, hair style parameters, or the like, may need to be redefined to meet to needs of production changes, costs, artistic developments, or the like.

In yet another example, the level of detail of a character may change. The source mesh can be the full resolution character, and the destination mesh may a low resolution mesh. The low resolution mesh may be used to pose and display the character more efficiently. In a further example, morphing between a pair of shapes may utilize a continuous correspondence generated between surfaces. In yet a further example, by using morphing localized to defined regions, it may be possible to design new characters by locally blending between basis shapes taken from a standardized catalog. FIG. 15 ends in step 1560.

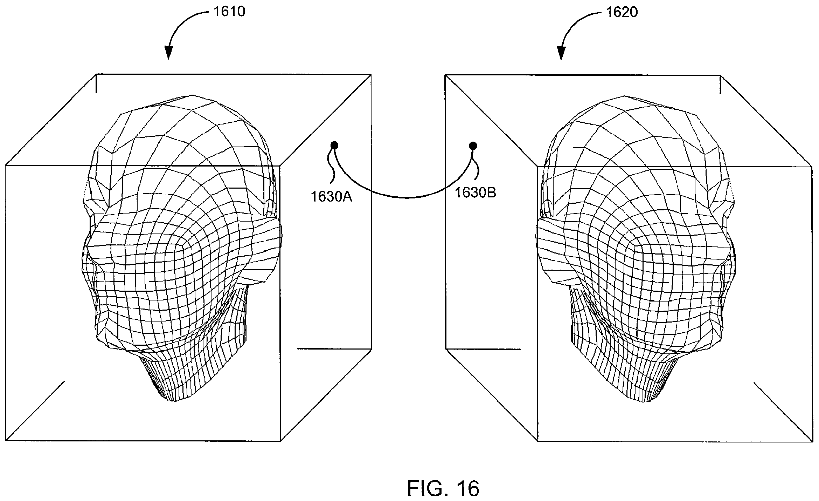

FIG. 16 is an illustration of a correspondence between a first region and a second region. In this example, region 1610 is defined by boundary 1620 and region 1630 is defined by boundary 1640. Region 1610 and 1630 can include location and area. For example, region 1610 may be located at, on, or near mesh 310 of FIG. 3 and include a point or a non-zero area. Boundary 1620 and 1640 can include one or more geometric primitives, such as points, lines, curves, volumes, or the like. Correspondence 1650 may be created in various embodiments to transfer information associated with point 1660 that lies within region 1610 to be associated with or mapped to point 1670 that lies within region 1630. Correspondence 1650 may provide unidirectional or bidirectional information sharing. Information, thus, can be "pushed through" correspondence 1650 to be shared between region 1610 and region 1630.

Consider an example, given a source mesh $M$ (e.g., mesh 310) equipped with a collection of scalar fields $f_1...f_n$, and a destination mesh $M'$ (e.g., mesh 360), the scalar fields may be transferred to $M'$ in a feature preserving way. That is, scalar fields $f'_1...f'_n$ may be constructed on $M'$. The fields may be constructed using equation (1):

$$f'_i(p') = f_i(C(p')) \hspace{4cm} (1)$$

In equation (1), C can be a correspondence between $M$ and $M'$. For example, $C : M' \rightarrow M$ may be a "feature preserving" map (e.g., a homeomorphism or special isomorphism between topological spaces which respects topological properties) from $M'$ to $M$. C can be feature preserving in that the correspondence carries "important features" of $M'$ to their corresponding features on $M$.

In some embodiments, the notion of important features can be captured by a user-specified collection of geometric primitives or "feature curves." The user may draw or otherwise place points, lines, curves, volumes, or other n-dimensional objects on or near a mesh. Curves may provide certain degrees of flexibility, thus, we refer to the collection of primitives as feature curves. These feature curves may form a network that partitions a mesh into a set of regions or "feature regions" (e.g., regions 1610 and 1630 formed by boundaries 1620 and 1640, respectively). A feature region may include a region topologically equivalent to a disk.

As discussed above, features may include any prominent aspect of an object or model. For example, features may include characteristic parts of a person's face, such as eyes, nose, lips, ears, or like. Features may also include a set or collection of attributes, constraints, groupings, contexts, or component. A feature curve may include one or points, lines, curves, planes, volumes, or the like associated with a feature. A feature curve may be combined with one or more other feature curves to create a feature curve region. A feature curve may enclose a feature to form a topological disc.

A set of feature curves may form a feature curve network.

For example, let $R$ be a feature region on $M$ that is bounded by $m$ feature curves $c_1...c_m$. The feature curves may be ordered in counter-clockwise fashion around the region. Similarly, let $R'$ be the corresponding feature region on $M'$ bounded by corresponding feature curves $c'_1...c'_m$. $M$ may be first parameterized on a regular m-gon $P_m$ in a plane. Curve $c_i$ can be uniformly parameterized on the $i$-th edge of $P_m$.

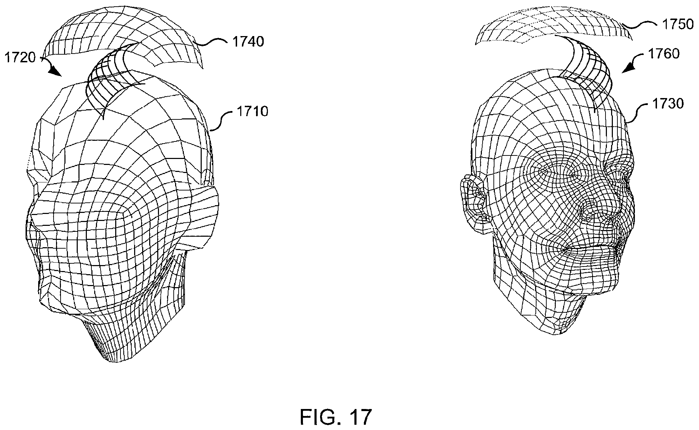

FIG. 17 illustrates mesh region 1700A and corresponding mesh region 1700B parameterized over a regular hexagon in one embodiment. In this example, mesh region 1700A may be bounded by feature curves 1710A, 1720A, 1730A, 1740A, 1750A, and 1760A going counter-clockwise. Since the region can be bounded by six feature curves, the region may be parameterized over a regular hexagon in the common parameter domain $P_6$. Mesh region 1700B may be bounded by feature curves 1710B, 1720B, 1730B, 1740B, 1750B, and 1760B going counter-clockwise. Since the region is also bounded by six feature curves, the region can be parameterized over the same regular hexagon in the common parameter domain $P_6$.

In other words, if $vik$ is the $k$-th vertex of $c_i$ (in counter-clockwise order), the image of in the $k$-th vertex in the parameter domain can be located according to equation (2):

$$\frac{p_i(1-k)+kp_{i+1}}{|c_i|} \qquad (2)$$

In equation (2), $|c_i|$ can denote the number of vertices in $c_i$, and $p_1...p_m$ can denote the vertices of $P_m$. The parametric images of the remaining vertices of the region can be determined, e.g., by minimizing harmonic distortion subject to these boundary conditions. This defines a parameterization $\phi : P_m \to R$.

The region $R'$ can be similarly parameterized over $Pm$ to create a parameterization $\phi' P_m \to R'$. The feature preserving map $C$ mentioned above is then given by equation (3):

$$C(p') := \phi \circ \phi'^{-1}(p') \qquad (3)$$

Accordingly, the common parameter domain $Pm$ can be used to build a global and continuous correspondence between all points of the source and destination surfaces. Based on the correspondence, information can be shared between the source and destination. In various embodiments, information may be shared between characters, providing the flexibility of evolving characters, sharing of geometry and mesh topology, sharing of point weight groups, shader variables, hair style parameters, or the like. In yet a further example, by using morphing localized to defined regions, it may be possible to design new characters by locally blending between basis shapes taken from a standardized catalog.

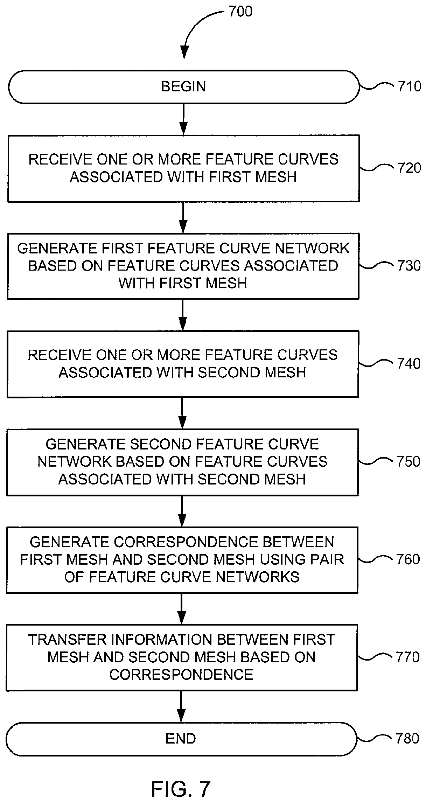

FIG. 7 is a flowchart of method 700 in various embodiments for transferring information between meshes using feature curve networks. FIG. 7 begins in step 710.

In step 720, one or more feature curves associated with a first mesh are received. In one example, a user may manually draw or place one or more curves on the first mesh. In another example, information defining feature curves may be imported or loaded from a file. In yet another example, information defining feature curves may be inferred or otherwise determined from parameterizations associated with the first mesh. Feature curves may be user-authored on a digital object, or placed on a physical object and created when scanning to digitize the physical object. In step 730, a first feature curve network is generated based on feature curves associated with the first mesh.

In step 740, one or more feature curves associated with a second mesh are received. In step 750, a second feature curve network is generated based on the one or more feature curves associated with the second mesh.

In step 760, a correspondence is generated between the first mesh and the second mesh using the pair of feature curve networks (i.e., the first and second feature curve networks). As discussed above, the correspondence can be feature preserving in that the correspondence carries "important features" of the first mesh to their corresponding features on second mesh.

In step 770, information is transferred between the first mesh and the second mesh based on the correspondence. The transfer of information may include a unilateral or bilateral transfer or sharing of information between the first mesh and the second mesh. FIG. 7 ends in step 780.

A variety of methods or tools may be provided for authoring feature curves. In one embodiment, a user may specify a set of feature curves interactively using commonly available selection tools, such as shortest path selection. In yet other embodiments, appropriate when the source mesh has a UV set, feature curves may be inferred from the discontinuities in the UV set.

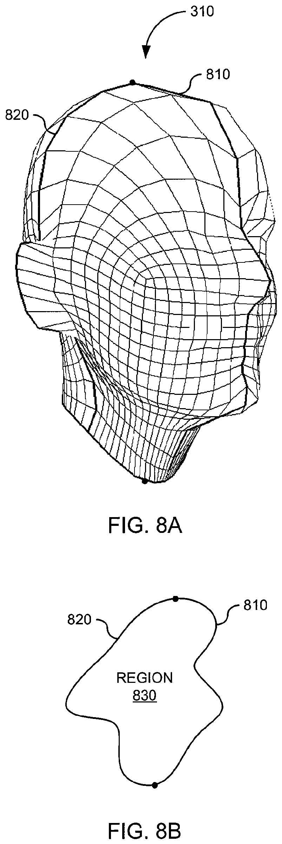

FIGS. 8A and 8B illustrate mesh 310 including a feature curve network having less than three feature curves that define a region in one embodiment. Referring to FIG. 8A, mesh 310 includes feature curves 810 and 820. In this example, a user has drawn feature curve 810 and feature curve 820 on mesh 310. The separation between each feature curve is illustrated by a solid dot near the top of the head and near the base of the neck. In various embodiments, a feature curve may be defined by at least one point that lies within the interior of a face of mesh 310.

Feature curve 810 and 820 can be interconnected to form a feature region. Referring to FIG. 8B, feature region 830 can be defined by feature curve 810 and feature curve 820. A set of feature curve regions on mesh 310 may define a feature curve network.

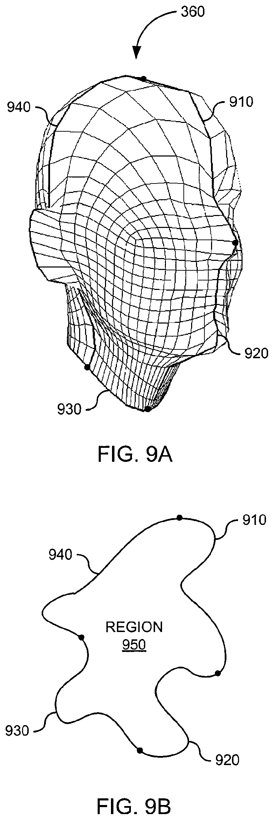

FIGS. 9A and 9B illustrate mesh 310 including a feature curve network having more than three feature curves that define a region. Referring to FIG. 9A, mesh 310 includes feature curves 910, 920, 930, and 940 on mesh 360. The separation between each feature curve is illustrated by a solid dot near the top of the head, on the nose, at the base of the neck, and near the back of the neck. Feature curves 910, 920, 930, and 940 can be interconnected to form a feature region. Referring to FIG. 9B, region 950 can be defined by feature curves 910, 920, 930, and 940.

In some embodiments, having feature curves specified on a source mesh, corresponding feature curves may be constructed on a destination mesh. For example, a user may copy the source feature curves as 3D curves into rough geometric proximity to the destination mesh. Modeling tools can be used to position the vertices of these curves near their corresponding locations on the destination mesh. The repositioned vertices can then be "snapped" onto the destination mesh to produce the destination feature curves.

The correspondence generated by method 700 in various embodiments can provide a reasonably good starting point for most significant features, such as lips, eye brows, and ears if feature curves are appropriately positioned. In some embodiments, the correspondence can be refined to match several finer resolution features, such as nostrils. Feature curve refinement can also be appropriate when the correspondence requires significant adjustment. One way to achieve refinement can be to add new feature curves to more finely partition the meshes into feature regions. In further embodiments, more subtle adjustments can be provided using a lightweight and flexible method of adding additional correspondence constraints to the interior of regions created by feature curves.

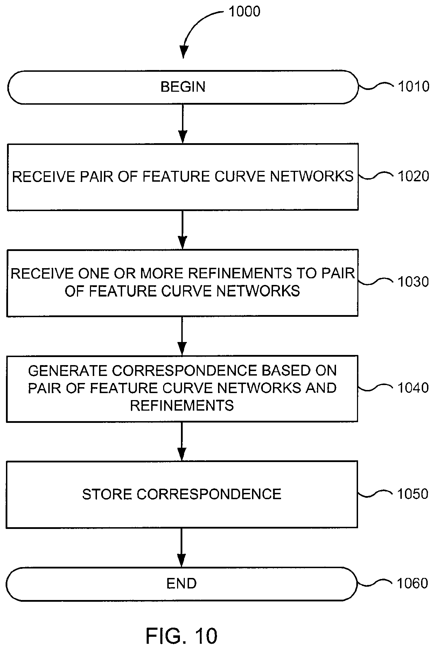

FIG. 10 is flowchart of method 1000 in various embodiments for generating a correspondence based on refinements to pair of feature curve networks. FIG. 10 begins in step 1010.

In step 1020, a pair of feature curve networks is received. In step 1030, one or more refinements to the pair of feature curve networks are received. Refinements to the pair of feature curve networks may include adding additional geometric primitives, such as points, lines, curves, volumes, etc. to the interior of feature regions. In one example of a refinement to a pair of feature curve networks, an additional pair of points may be positioned as interior constraints, one on the source, and a corresponding one on the destination.

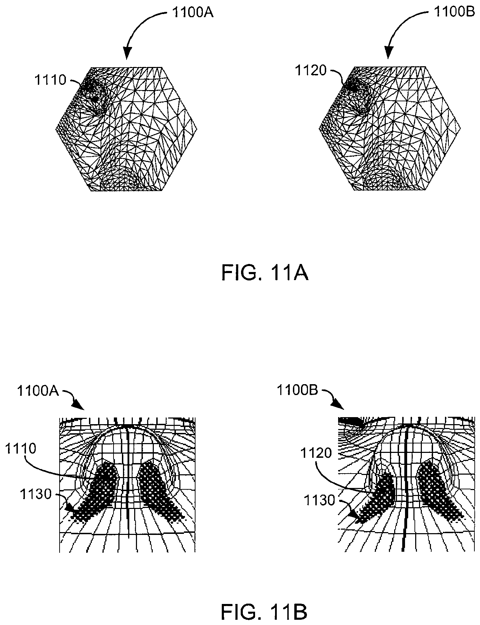

FIG. 11A illustrates interior constraints within two corresponding regions in one embodiment. Referring to FIG. 11A, mesh region 1100A may be parameterized over a regular hexagon in one embodiment. A corresponding mesh region 1100B may similarly be parameterized over then same regular hexagon in a common parameter domain. In this example, a pair of points may be placed on each mesh region 1100A and 1100B to provide interior constrains to refine the correspondence. For example, the pair of points may be centered in the left nostril of a source mesh and a destination mesh.

The additional points used to specify the constraint need not be located at vertices. Constraints can be arbitrarily located on the source and destination meshes and placed to reside in corresponding feature regions. In some situations, a user may desire to specify several additional constraints per region. In some embodiments, the user may specify corresponding edges, such that the additional constraints form corresponding cell complexes.

Referring again to FIG. 10, in step 1040, a correspondence is generated based on the pair of feature curve networks and the refinements. For example, a refined correspondence that respects any additional interior constraints can be achieved by introducing an intermediate deformation $h : Pm \rightarrow Pm$ into equation (3) and shown in equation (4):

$$C(p') := \phi \circ h \circ \phi'^{-1}(p') \qquad (4)$$

In some embodiments, $h$ can be constructed as a two-dimensional harmonic deformation. For example, the cage for $h$ may be the boundary of $Pm$ and the interior cage components correspond to interior and edge constraints. In step 1050, the correspondence is stored. FIG. 10 ends in step 1060.

FIG. 11B illustrates results of the interior constraints within the two corresponding regions in one embodiment. In this example, mesh region 1100A can include a scalar field 1130 indicating shader variables for the location of the left nostril of a model. Scalar field 1130 can be pushed through the refined correspondence to mesh region 1100B. Thus, the pair of points 1110 and 1120 can be used to refine the location or look of the location of the left nostril of another model. In this example, point 1120 may be placed to offset or lower the location of the shader variables of the left nostril.

In various embodiments, accordingly, a new robust and controllable method for transferring data between meshes of substantially different topology and geometry can be implemented using feature curves. As discussed above, the input to the basic method can include a source mesh (e.g., possessing a set of scalar fields to be transferred), a network of feature curves on the source mesh, a destination mesh to receive the data, and a corresponding network of feature curves on the destination. From this input, a correspondence can be generated between all continuously varying points of the two surfaces. Information can be shared based on the correspondence, such that each scalar field on the source is mapped through the correspondence to define a scalar field on the destination.

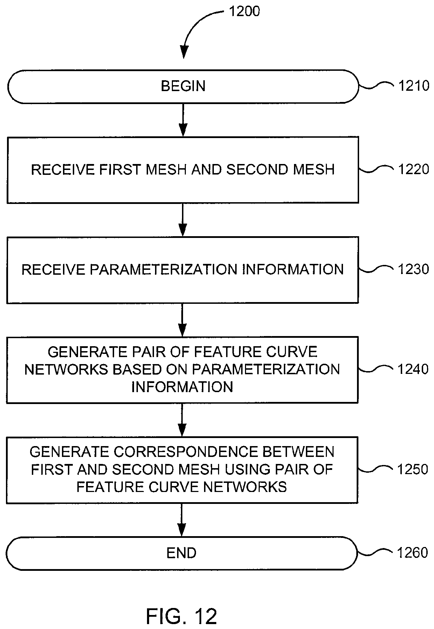

FIG. 12 is a flowchart of method 1200 in various embodiments for generating a correspondence between meshes based on parameterization information for sharing information between the meshes. The processing depicted in FIG. 12 may be performed by software modules (e.g., instructions or code) executed by a processor of a computer system, by hardware modules of an electronic device, or combinations thereof. FIG. 12 begins in step 1210.

In step 1220, a first mesh and second mesh is received. Information may be received that defines or otherwise specifies the first and second mesh. Each mesh may include a single integral mesh or may include a collection of connected meshes. As discussed above, the first and second mesh may include a collection of polygons, interconnected at vertices, that form the topology and/or geometry of a model. Each mesh may also include information that may further specify variables, controls, fields, rigging, color/lighting data, or the like.

In step 1230, parameterization information is received. Parameterization information can include information that provides an identification of parameters associated with an object. For example, a parameterization may include a complete set of effective coordinates or degrees of freedom of a system, process, or model. Parameterization of a line, surface or volume, for example, may imply identification of a set of coordinates from which any point (on, at, or near the line, surface, or volume) may be uniquely identified by a set of numbers.

In one example, parameterization information may include a UV set or map. A UV map can transform a 3D object onto a 2D image. The 2D image may be commonly referred to as a texture or texture map. The XYZ coordinates for the original 3D object in the modeling space may be parameterized over UV coordinates of the transformed 2D object. In other examples, parameterization information may include one or more maps, harmonic parameterizations, or the like.

In step 1240, a pair of feature curve networks is generated based on the parameterization information. For example, one or more partitions, divisions, or parameterizations may be identified on the first mesh from which a set of feature curves may be determined or inferred. A correspondence set of feature curves may be determined on the second mesh. Each set of feature curves can create a feature curve network.

In step 1250, a correspondence is generated between the first mesh and the second mesh based on the pair of feature curve networks. The correspondence can include functions, relationships, correlations, etc. between one or more points associated with the first mesh and one or more points associated with second mesh. The correspondence may include a mapping from every location on or within a space near the first mesh to a unique location on or near the second mesh. The correspondence may map one or more points, curves, surfaces, regions, objects, or the like, associated with the first object to one or more points, curves, surfaces, regions, objects, or the like associated with the second object.

In various embodiments, the correspondence can be represented by a parameterization built for source and destination meshes over a common domain. This common parameter domain can provide a global and continuous correspondence between all points of the source and destination surfaces. As discussed above, the correspondence may rely on feature curve networks which may, in part, be automatically created based on parameterization information, from user-supplied points, user-supplied curves, other discontinuities, or the like. FIG. 12 ends in step 1260.

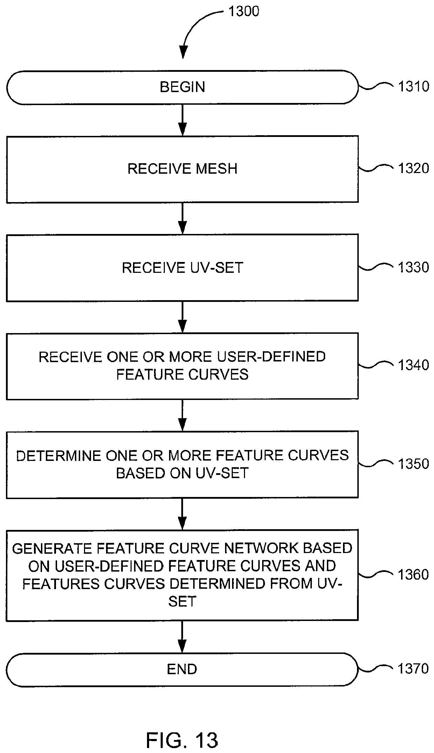

FIG. 13 is a flowchart of method 1300 in various embodiments for generating a correspondence between meshes based on UV sets. FIG. 13 begins in step 1310.

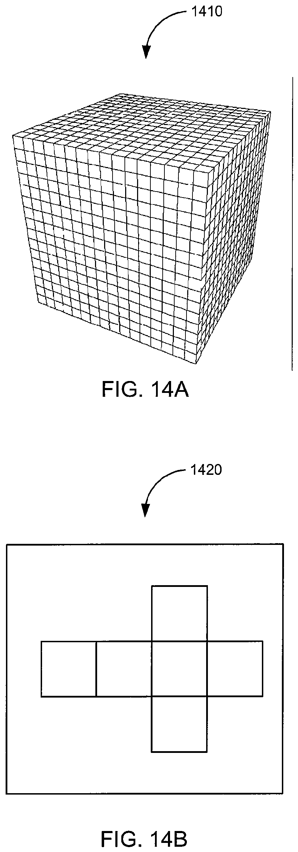

In step 1320, a mesh is received. For example, FIG. 14A illustrates mesh 1410 in one embodiment. Mesh 1410, in this example, appears as a cube. Referring again to FIG. 13, in step 1330, a UV set is received. FIG. 14B illustrates UV map 1420 associated with mesh 1410.

In step 1340 of FIG. 13, one or more user-defined feature curves are received. In step 1350, one or more feature curves are determined based on the UV set (e.g., UV map 1420). In step 1360, a feature curve network is generated based on the user-defined feature curves and the features curves determined from the UV-set. FIG. 13 ends in step 1370.

In various embodiments, it may be common for a source mesh to possess a UV set that parameterizes regions that are separately shaded. For example, each face of the cube mesh 1410 shown in FIG. 14A may be separately shaded.

When a UV set is present on a source mesh, the UV regions can be used as parametric domains to be used to build a global and continuous correspondence between all points of the source and destination surfaces. Therefore, feature curves can be inferred to "cover" the boundaries of the UV regions. That is, if the UV set is discontinuous on an edge $V_i V_j$ of the source mesh $M$, then exactly one feature curve contains $V_i V_j$.

Once the corresponding feature curves are established on destination mesh $M'$, in some embodiments, the UV set can be transferred to $M'$ in two steps:

    1. Transfer UV values along feature curves. The UV values may be transferred using simple linear interpolation along the feature curve edges of $M'$, picking off corresponding UV values from the associated feature curve on $M$.

2. Harmonically smooth UV values on the destination mesh within the interior of each UV region. This may be accomplished using Maya UV smoothing tools. For each UV region $\Omega$, a pair of parameterizations $\Omega \to M$ and $\phi$: $\Omega \to M'$ may be established from which the correspondence $C$ can again be defined as in equation (3) or as refined using one or more interior constraints.

In various embodiments, a feature curve inference algorithm can be based on an analysis of an auxiliary structure called a seam complex. The seam complex may consists of a set of edges, one per seam edge of the source mesh $M$. An edge can be a seam edge if either its org or dest vertices has different attribute values with respect to the two faces meeting at the edge.

Once the seam complex is constructed, "critical vertices" may be identified and processed one at a time. A critical vertex can include a vertex with other than two incident seam edges. Critical vertices can represent feature curve endpoints. Once the critical vertices have been processed, there may still be one or more closed loops. For each of these, an arbitrary vertex may be chosen as the feature curve endpoint and the loop is traced until it closes back on itself.

For example, in the following pseudo-code, let criticalSet be the set of critical vertices, let edgeSet be the set of unprocessed edges in the seam complex, and let full(v) be the map from seam vertices back to vertices in the full mesh:

```
-- process critical vertices
for each v in criticalSet
      for each edge e incident to v
            if e in edgeSet
            -- create a new curve with e as first edge
            c = new curve with full(v) as the first point
            vNext = other vertex incident to e
            add full(vNext) to c
            remove e from edgeSet
            while (vNext not in criticalSet)
                  e = unique other edge in edgeSet
                  incident to vNext
                  remove e from edgeSet
                  vNext = other vertex incident to e
                  add full(vNext) to c
-- process non-critical loops
while edgeSet isn't empty
      e = some edge in edgeSet
      remove e from edgeSet
      vStart = v = org e
      c = new curve
      add full(v) to c
      while (dest e != v)
            add full(dest e) to c
            advance e
            remove e from edgeSet
            add full(dest e) to c
```

In various embodiments, accordingly, a new robust and controllable method for transferring data between meshes of substantially different topology and geometry can be implemented using feature curves. As discussed above, the input to the basic method can include a source mesh (e.g., possessing a set of scalar fields to be transferred), a network of feature curves on the source mesh, a destination mesh to receive the data, and a corresponding network of feature curves on the destination. From this input, a correspondence can be generated between all continuously varying points of the two surfaces. Information can be shared based on the correspondence, such that each scalar field on the source is mapped through the correspondence to define a scalar field on the destination.

FIG. 15 is a simplified flowchart of method 1500 in various embodiments for generating a volume correspondence between meshes for sharing information between the meshes. The processing depicted in FIG. 15 may be performed by software modules (e.g., instructions or code) executed by a processor of a computer system, by hardware modules of an electronic device, or combinations thereof. FIG. 15 begins in step 1510.

In step 1510, a pair of surfaces is received. For example, information may be received specifying a surface or region of a source mesh and a corresponding surface or region of a destination mesh. The pair of surfaces may be authored by a user or determined based on one or more discontinuities, parameterizations, or the like. Feature curves may be used to partition a source mesh and a destination mesh into a pair of feature curve networks. The pair of surfaces may be identified within the pair of feature curve networks.

In step 1520, a surface correspondence is generated based on the pair of surfaces. The surface correspondence can include functions, relationships, correlations, etc. between one or more points associated with a first surface and one or more points associated with a second surface. The surface correspondence may include a mapping from every location on the first surface to a unique location on the second surface. The correspondence may map one or more points, curves, surfaces, regions, objects, or the like, associated with the first object to one or more points, curves, surfaces, regions, objects, or the like associated with the second object.

In various embodiments, a parameterization is built for source and destination meshes over a common domain. This common parameter domain can then be used to build the global and continuous surface correspondence between all points of the source and destination surfaces. The basic framework of the parameterization may rely on user-supplied points, user-supplied curves, inferred discontinuities, or the like. In some embodiments, the parameterization may include a set of feature curves defining a feature curve network.

In step 1530, a volume correspondence is generated based on the surface correspondence. The volume correspondence can include functions, relationships, correlations, etc. between one or more points associated with a first volume or other n-D space and one or more points associated with a second volume or n-D space. The volume correspondence may include a mapping from every location on and within the first volume to a unique location on or within the second volume. The correspondence may map one or more points, curves, surfaces, regions, objects, volumes, n-D spaces, (n-1)-D spaces, or the like, associated with a first object to one or more corresponding points, curves, surfaces, regions, objects, volumes, n-D spaces, (n-1)-D spaces, or the like associated with a second object.

In some embodiments, the volume correspondence may include a harmonic deformation correspondence. The harmonic deformation correspondence may provide non-negativity and interior locality for volume deformation techniques using a topologically flexible structure, called a cage, that may consists of a closed three dimensional mesh. The cage can optionally be augmented with additional interior vertices, edges, and faces to more precisely control the interior behavior of the deformation. Harmonic coordinates can be generalized barycentric coordinates that can be extended to any dimension, providing non-negativity in strongly concave situations, and having magnitudes that fall off with distance as measured within the cage. FIG. 15 ends in step 1550.

FIG. 16 is an illustration of a volume correspondence between volume 1610 and volume 1620. In this example, a cube can be constructed to represent volume 1610. Found within volume 1610 is a mesh object in the form of a human head. A corresponding cube can be constructed to represent volume 1620. The volume correspondence can provide a mapping from every location in or on volume 1610 to a unique location in or on volume 1620. In one example, point 1630A can be mapped via the volume correspondence to point 1630B.

Accordingly, information may be shared or otherwise transferred between a first mesh and a second mesh based on the volume correspondence. The information may include character rigging, topology data, geometry data, shader variables, hair objects, information or objects within a proximity to either mesh, painter data, or the like, that may be found at, found near, found on, found in, protruding from, or extending into an object. The transfer of information may occur from a first mesh to a second mesh. The transfer may also occur from the second mesh to the first mesh.

FIG. 17 illustrates a first mesh and a corresponding second mesh for transferring hair styles in one embodiment. As shown in FIG. 17, mesh 1710 is formed to represent a head of a human character. An animator or other artist may construct a hair style 1720 (e.g., a mohawk) for the character. Hair style 1720 may include linear objects, fields, variables, lighting information, or the like, for example, to represent the hair, its position relative to mesh 1710, position of individual hairs or objects with respect to each other, how the hair interacts with other objects, or the like. In this example, hair style 1720 can be placed on top of mesh 1710, substantially in the center.

In one embodiment, the location or position of hair variables or hair objects associated with hair style 1720 may be shared or otherwise transferred to other objects using a surface correspondence. A first set of feature curves may be authored or otherwise placed on mesh 1710 to create a first feature curve network. A corresponding second set of feature curves may be authored or otherwise placed on mesh 1730 to create a second set of feature curves. A surface correspondence may be generated that maps points or locations on mesh 1710 to points or locations on mesh 1730. Information at or near a point on mesh 1710 can be transferred to a corresponding point on mesh 1730.

In further embodiments, hair style 1720 may be shared or otherwise transferred to other objects using a volume correspondence. For example, the surface correspondence between mesh 1710 and 1730 may allow the mapping of the points at which hair objects are connected to mesh 1710, and thus are associated with a partition create by the first feature curve network. The surface correspondence may be extending in one or more dimensions using points, lines, curves, surfaces, surface regions, or other geometric primitives and objects that may be placed relative of a surface associated with mesh 1710 to construct volumes or other n-D spaces. Corresponding volumes or other n-D spaces may be constructed for mesh 1730. A volume correspondence may be created based on the surface correspondence that maps points or locations within a first volume or n-D space to unique points or locations in a corresponding volume or n-D space.

For example, surface 1740 may be positioned relative to mesh 1710. Based on all or a portion of mesh 1710 (e.g., the surface or region below hair style 1720) and surface 1740 a volume or other n-D space may be constructed.

A corresponding surface 1750 may be positioned relative to destination mesh 1730. Based on all or a portion of mesh 1730 (e.g., a surface region on the scalp where hairs are desired to be placed) and surface 1750 a corresponding volume or other n-D space may be constructed. Information associated with hair style 1730, such as torsion and spring variables, can be transferred between corresponding volumes or n-D spaces based on the volume correspondence to create hair style 1760. Other transformations, such as scaling, rotation, translation, or the like may occur during or post transfer.

Accordingly, the creation of volume correspondences between meshes, and the transfer of information can be applied to a range of applications. For example, information may be shared between characters. As mentioned above, without requiring a common mesh topology, sharing can be accomplished between meshes with far more topological flexibility. In another example, the flexibility of evolving characters may be achieved. As the design of a character evolves, the geometry and mesh topology of the character may change. Changes can be made to variables, hair style parameters, clothing, or the like, and transferred between models.

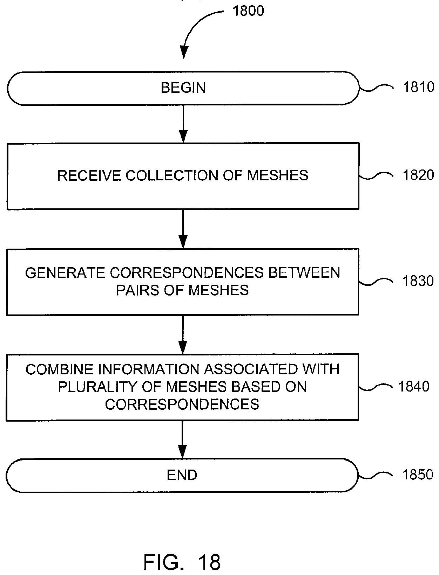

FIG. 18 is a simplified flowchart of method 1800 in various embodiments for shape blending. The processing depicted in FIG. 18 may be performed by software modules (e.g., instructions or code) executed by a processor of a computer system, by hardware modules of an electronic device, or combinations thereof. FIG. 18 begins in step 1810.

In step 1820, a collection of meshes is received. The collection may include one or more meshes or references to a set of meshes. The collection may include meshes for models having identical, similar, or different topologies, geometries, or the like.

In step 1830, correspondences between pairs of meshes are generated. Each correspondence between a pair of meshes can include functions, relationships, correlations, etc. between one or more points associated with a first mesh and one or more points associated with a second mesh. The correspondence may include a mapping from every location on or within a space near the first mesh to a unique location on or near the second mesh. The correspondence may map one or more points, curves, surfaces, regions, objects, or the like, associated with the first object to one or more points, curves, surfaces, regions, objects, or the like associated with the second object. The correspondence may include a surface correspondence and/or a volume correspondence.

In various embodiments, a parameterization is built for the pairs meshes over a common domain. This common parameter domain can then be used to build a global and continuous correspondence between all points of the source and destination surfaces. The basic framework of the parameterization may rely on user-supplied points, user-supplied curves, inferred discontinuities, or the like. In some embodiments, the parameterization may include a set of feature curves defining a feature curve network.

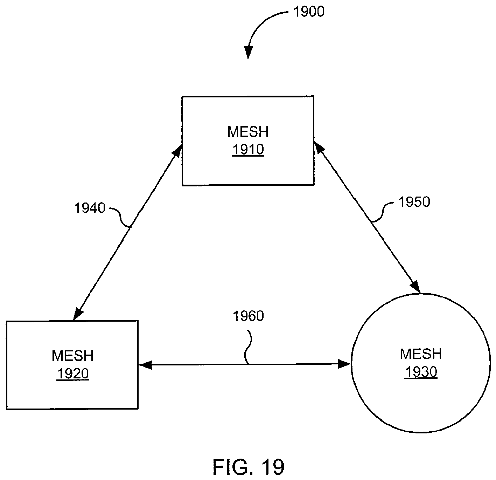

FIG. 19 is a block diagram of collection 1900 of meshes in one embodiment. In this example, collection 1900 can include meshes 1910, 1920, and 1930. Meshes 1910 and 1920 may have an identical or substantially similar topology (as indicated by the common rectangular shape). Mesh 1930 may have a different topology than meshes 1910 and 1920 (as indicated by a circular shape).

A correspondence is generated for each pair in collection. For example, correspondence 1940 may be created between meshes 1910 and 1920, correspondence 1950 may be created between meshes 1910 and 1930, and correspondence 1960 may be created between meshes 1920 and 1930. The correspondences may be created using features curve networks, in which one or more feature curves may be user authored or automatically determined in response to parameterization information associated with a mesh. The correspondences may include one or more surfaces correspondences and/or one or more volume correspondences.

Returning to FIG. 18, in step 1840, information associated with a plurality of meshes is combined based on the correspondences. For examples, information associated with meshes 1910 and 1920 in collection 1900 may be combined based on correspondence 1940. In various embodiments, information of type A from mesh 1910 may be combined with information of type A from mesh 1920 to create blended information of type A. The information from mesh 1910 may be summed, averages, or otherwise procedurally process with the information from mesh 1920 to generate like information of type A. In further embodiments, information of type A from mesh 1910 may be combined with information of type B from mesh 1920 to create blended information of a set of type A and B.

Accordingly, correspondences may be created between pairs of meshes in a collection of meshes. Information associated with a plurality of meshes can be "pushed" through the correspondences and blended or otherwise combined to create combinations of data that reflect new topologies, geometries, scalar fields, hair styles, or the like that may be transferred to a mesh of new or existing models. Thus, information can be shared, combined, and blended between meshes that may include differing topologies and geometries from other meshes in a collection. FIG. 18 ends in step 1850.

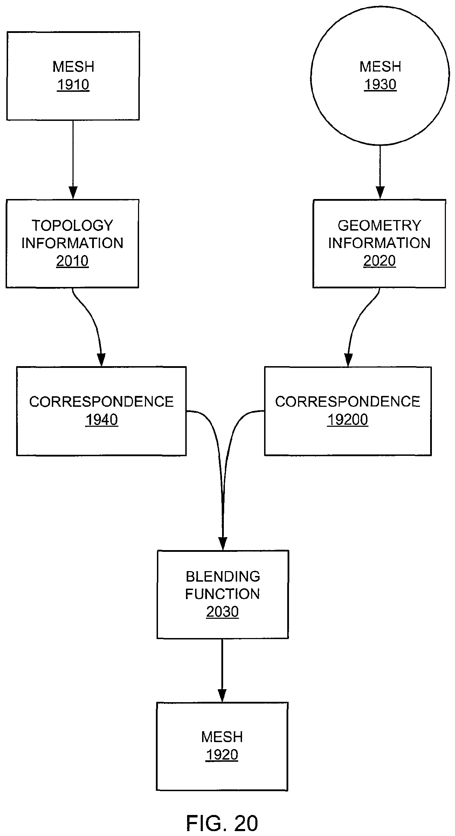

FIG. 20 is a block diagram illustrating blending of topology information and geometry information in one embodiment. In this example, topology information 2010 from mesh 1910 of FIG. 19 is pushed through correspondence 1940 with mesh 1920. Geometry information 2020 from mesh 1930 is pushed through correspondence 1960 with mesh 1920.

Blending function 2030 receives topology information 2010 and geometry information 2020 for application to mesh 1920. Since correspondences 1940 and 1960 provide full correspondences between all points between meshes 1910 and 1920, and between meshes 1930 and 1920, respectively, lending function 2030 can apply blended or combined information to corresponding points on mesh 1920. Blending function 2030 may include one or more values, parameters, attributes, or the like for controlling the weighting, scaling, or transformation of the blending or transfer of common types or different types of information from other meshes.

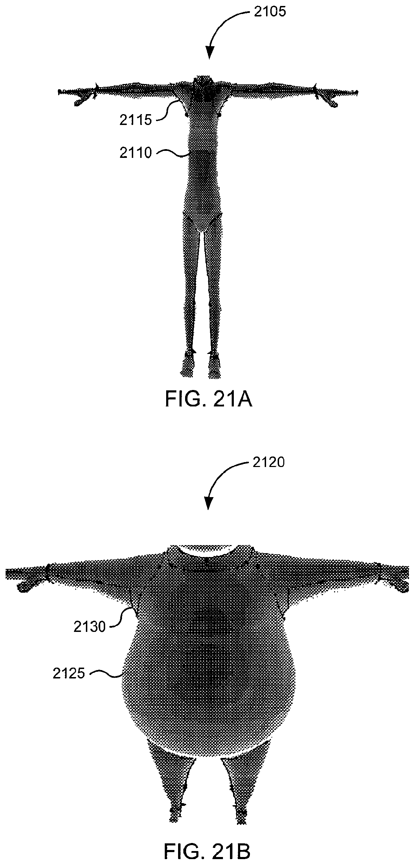

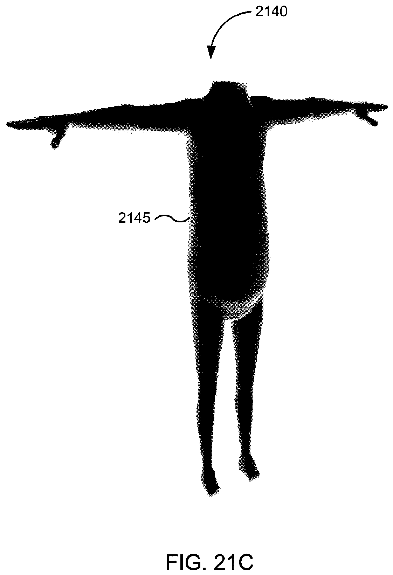

FIGS. 21A, 21B, and 21C illustrate a collection of meshes and a resultant blend in one embodiment. Referring to FIG. 21A, human character 2105 can be represented using mesh 2110. Mesh 2110 may include a first topology and provide the geometry to character 2105. For example, character 2105 may appear to be tall and thin. Mesh 2110 may include a feature curve network 2115. Feature curve network 2115 may include a set of feature curves (e.g., black lines with in-line arrows) that partition mesh 2115 into a collection of feature regions.

Referring to FIG. 21B, human character 2120 can be represented using mesh 2125. Mesh 2125 may include a second topology (i.e., a topology different from the first topology of character 2105) and provide the geometry of character 2120. For example, character 2120 may appear to be stocky and over-weight. Mesh 2125 may include a feature curve network 2130. Feature curve network 2130 may include a set of feature curves that partition mesh 2125 into a collection of feature regions.

In FIG. 21C, human character 2140 may be created using a blend of information from characters 2105 and 2120. Character 2140 may be represented by mesh 2145. In one example, a correspondence may be generated between mesh 2105 and mesh 2145 using feature curve network 2115 and a corresponding feature curve network placed on mesh 2145. Another correspondence may be generated between mesh 2120 and mesh 2145 using feature curve network 2130 and a corresponding feature curve network placed on mesh 2145. The same feature curve network placed on mesh 2145 may be used for created the correspondences. Alternatively, different feature curve networks may be used.

Using one or more correspondences between mesh 2105 and mesh 2145, the first topology of character 2105 may be transferred to mesh 2145 of character 2140. The first topology information of character 2105 may be blended with geometry information transferred from character 2120 using one or more correspondences to create character 2140. For example, a user or animator may use a correspondence to blend the first topology of character 2105 with 60% of the geometry of character 2120 to create character 2140.

In various embodiments, accordingly, information from a plurality of meshes in a collection may be blended or combined using correspondences between pairs of the meshes. The combined information can be used to create combinations of data that reflect new topologies, geometries, scalar fields, hair styles, or the like that may be transferred to a mesh of new or existing models. Thus, information can be shared, combined, and blended between meshes that may include differing topologies and geometries from other meshes in a collection.

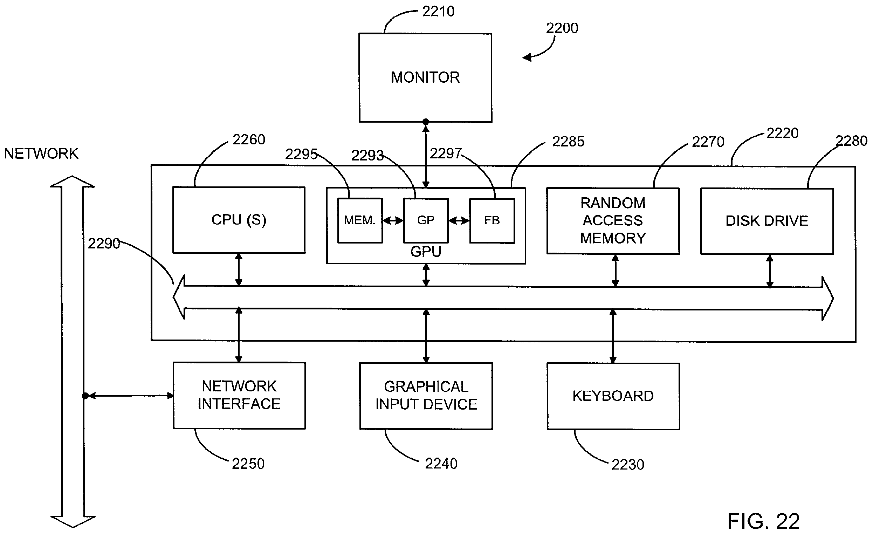

FIG. 22 is a block diagram of computer system 2200 that may be used to implement or practice various embodiments of an invention whose teachings may be presented herein. FIG. 22 is merely illustrative of a general-purpose computer system or specific information processing device for an embodiment incorporating an invention whose teachings may be presented herein and does not limit the scope of the invention as recited in the claims. One of ordinary skill in the art would recognize other variations, modifications, and alternatives.

In one embodiment, computer system 2200 can include monitor 2210, computer 2220, keyboard 2230, user input device 2240, computer interfaces 2250, or the like. Monitor 2210 may typically include familiar display devices, such as a television monitor, a cathode ray tube (CRT), a liquid crystal display (LCD), or the like. Monitor 2210 may provide an interface to user input device 2240, such as incorporating touch screen technologies.

Computer 2220 may typically include familiar computer components, such as processor 2260 and one or more memories or storage devices, such as random access memory (RAM) 2270, one or more disk drives 2280, graphics processing unit (GPU) 2285, or the like. Computer 2220 may include system bus 2290 interconnecting the above components and providing functionality, such as inter-device communication.

In further embodiments, computer 2220 may include one or more microprocessors (e.g., single core and multi-core) or micro-controllers, such as PENTIUM, ITANIUM, or CORE 2 processors from Intel of Santa Clara, California and ATHLON, ATHLON XP, and OPTERON processors from Advanced Micro Devices of Sunnyvale, California. Further, computer 2220 may include one or more hypervisors or operating systems, such as WINDOWS, WINDOWS NT, WINDOWS XP, VISTA, or the like from Microsoft or Redmond, Washington, SOLARIS from Sun Microsystems, LINUX, UNIX, and UNIX-based operating system.

In various embodiments, user input device 2240 may typically be embodied as a computer mouse, a trackball, a track pad, a joystick, a wireless remote, a drawing tablet, a voice command system, an eye tracking system, or the like. User input device 2240 may allow a user of computer system 2200 to select objects, icons, text, user interface widgets, or other user interface elements that appear on monitor 2210 via a command, such as a click of a button or the like.

In some embodiments, computer interfaces 2250 may typically include a communications interface, an Ethernet card, a modem (telephone, satellite, cable, ISDN), (asynchronous) digital subscriber line (DSL) unit, FireWire interface, USB interface, or the like. For example, computer interfaces 2250 may be coupled to a computer network, to a FireWire bus, a USB hub, or the like. In other embodiments, computer interfaces 2250 may be physically integrated as hardware on the motherboard of computer 2220, may be implemented as a software program, such as soft DSL or the like, or may be implemented as a combination thereof.

In various embodiments, computer system 2200 may also include software that enables communications over a network, such as the Internet, using one or more communications protocols, such as the HTTP, TCP/IP, RTP/RTSP protocols, or the like. In some embodiments, other communications software and/or transfer protocols may also be used, for example IPX, UDP or the like, for communicating with hosts over the network or with a device directly connected to computer system 2200.

RAM 2270 and disk drive 2280 are examples of machine-readable articles or computer-readable media configured to store information, such as computer programs, executable computer code, human-readable source code, shader code, rendering enginges, or the like, and data, such as image files, models including geometrical descriptions of objects, ordered geometric descriptions of objects, procedural descriptions of models, scene descriptor files, or the like. Other types of computer-readable storage media or tangible machine-accessible media include floppy disks, removable hard disks, optical storage media such as CD-ROMS, DVDs and bar codes, semiconductor memories such as flash memories, read-only-memories (ROMS), battery-backed volatile memories, networked storage devices, or the like.

In some embodiments, GPU 2285 may include any conventional graphics processing unit. GPU 2285 may include one or more vector or parallel processing units that may be user programmable. Such GPUs may be commercially available from NVIDIA, ATI, and other vendors. In this example, GPU 2285 can include one or more graphics processors 2293, a number of memories and/or registers 2295, and a number of frame buffers 2297.

As suggested, FIG. 22 is merely representative of a general-purpose computer system or specific data processing device capable of implementing or incorporating various embodiments of an invention presented within this disclosure. Many other hardware and/or software configurations may be apparent to the skilled artisan which are suitable for use in implementing an invention presented within this disclosure or with various embodiments of an invention presented within this disclosure. For example, a computer system or data processing device may include desktop, portable, rackmounted, or tablet configurations. Additionally, a computer system or information processing device may include a series of networked computers or clusters/grids of parallel processing devices. In still other embodiments, a computer system or information processing device may techniques described above as implemented upon a chip or an auxiliary processing board.

Various embodiments of any of one or more inventions whose teachings may be presented within this disclosure can be implemented in the form of logic in software, firmware, hardware, or a combination thereof. The logic may be stored in or on a machine-accessible memory, a machine-readable article, a tangible computer-readable medium, a computer-readable storage medium, or other computer/machine-readable media as a set of instructions adapted to direct a central processing unit (CPU or processor) of a logic machine to perform a set of steps that may be disclosed in various embodiments of an invention presented within this disclosure. The logic may form part of a software program or computer program product as code modules become operational with a processor of a computer system or an information-processing device when executed to perform a method or process in various embodiments of an invention presented within this disclosure. Based on this disclosure and the teachings provided herein, a person of ordinary skill in the art will appreciate other ways, variations, modifications, alternatives, and or methods for implementing in software, firmware, hardware, or combinations thereof any of the disclosed operations or functionalities of various embodiments of one or more of the presented inventions.

The disclosed examples, implementations, and various embodiments of any one of those inventions whose teachings may be presented within this disclosure are merely illustrative to convey with reasonable clarity to those skilled in the art the teachings of this disclosure. As these implementations and embodiments may be described with reference to exemplary illustrations or specific figures, various modifications or adaptations of the methods and/or specific structures described can become apparent to those skilled in the art. All such modifications, adaptations, or variations that rely upon this disclosure and these teachings found herein, and through which the teachings have advanced the art, are to be considered within the scope of the one or more inventions whose teachings may be presented within this disclosure. Hence, the present descriptions and drawings should not be considered in a limiting sense, as it is understood that an invention presented within a disclosure is in not way limited to those embodiments specifically illustrated,

Accordingly, the above description and any accompanying drawings, illustration, and figures are intended to be illustrative but not restrictive. The scope of any invention presented within this disclosure should, therefore, be determined not with simple reference to the above description and those embodiments shown in the figures, but instead should be determined with reference to the pending claims.

One aspect of the present invention provides a computer-implemented method for generating correspondences for transferring information between objects, the method comprising receiving a first mesh; receiving a first feature curve network associated with the first mesh; receiving a second Mesh; receiving a second feature curve network associated with the second mesh; and generating a correspondence between the first mesh and the second mesh using one or more harmonic functions in response to the first feature curve network associated with the first mesh and the second feature curve network associated with the second mesh.

One aspect of the present invention provides a computer-implemented method for generating correspondences for transferring information between objects, the method comprising receiving a first pair of surfaces; generating a surface correspondence based on the pair of surfaces; and generating a volume correspondence based on the surface correspondence.

In one embodiment the method further comprises transferring information between volumes associated with the pair of surfaces based on the volume correspondence.

In one embodiment generating the volume correspondence comprises generating the volume correspondence in response to a second pair of surfaces

In one embodiment the method further comprises generating a harmonic reformation correspondence based on the second pair of surfaces.

In one embodiment generating the surface correspondence comprises generating the surface correspondence based on a pair of feature curve networks associated with the pair of surfaces.

In one embodiment the method further comprises receiving a set of constraints associated with the pair of surfaces; and wherein generating the volume correspondence comprises generating the volume correspondence based on the set of constraints.

In one aspect the present invention provides a computer-implemented method for generating correspondences for transferring information between collections of objects, the method comprising receiving a collection of meshes, the collection of meshes having at least 2 topologies; generating a correspondence between all pairs in the collection of meshes; and combining information associated with a plurality of meshes in the collection of meshes based on the correspondence.

In one embodiment combining the information associated with the plurality of meshes in the collection of meshes comprises combining shape associated with two or more meshes in the collection of meshes.

In one embodiment combining the information associated with the plurality of meshes in the collection of meshes comprises combining geometry associated with two or more meshes in the collection of meshes.

In one embodiment the method further comprises generating an output mesh based on the combined information.

In one embodiment generating the correspondence between all pairs in the collection of meshes comprises generating the correspondence between each mesh in the collection of meshes and an output mesh in the collection of meshes.

In one embodiment generating the correspondence between all pairs in the collection of meshes comprises generating the correspondence based on one or more harmonic functions.

In one embodiment generating the correspondence between all paints in the collection of meshes comprises generating the correspondence based on a set of feature curve networks associated witch the meshes.

In one embodiment the set of feature curve networks comprise at least one feature curve that is defined by at least one point that lies in the interior of a face associated with one of the meshes in the collection of meshes.

One aspect of the present invention provides a method for detailing differences between objects, the method comprising receiving a collection of meshes, the collection of meshes having at least 2 topologies; generating a correspondence between all pairs in the collection of meshes; and combining information associated with a plurality of meshes in the collection of meshes based on the correspondence; determining difference information based on the correspondence; and storing the difference information.

In one embodiment storing the difference information comprising storing the difference information as a bump map.

In one embodiment storing the difference information comprising storing the difference information as a set of wavelet coefficients.

## Claims

1. A computer-implemented method for generating correspondences for transferring information between objects, the method comprising:

    receiving a first mesh and a second mesh;
    receiving a pair of feature curve networks associated with the first mesh and the second mesh, at least one feature curve in a first feature curve network of the pair of feature curve networks authored by a user on or near the first mesh separately from the geometry of the first mesh and in curve correspondence with at least one feature curve in the second feature curve network of the pair of feature curve networks authored on or near the second mesh by a user separately from the geometry of the second mesh,
    wherein at least one feature curve in at least one feature curve network of the pair of feature curve networks is defined by a point that lies in the interior of a face associated with one of the first mesh or the second mesh, or
    wherein at least a portion of the feature curves in at least one feature curve network in the pair of feature curve networks is determined in response to at least a 2D parameterization associated with a surface of the first mesh or the second mesh; and
    generating a surface correspondence between the at least one surface of the first mesh and at least one surface of the second mesh based on curve correspondences between feature curves in the pair of feature curve networks.

, whereby a full correspondence is created between all points of the source mesh and all points of the destination mesh.

2.  The method of claim 1 wherein generating the correspondence between the first and second meshes comprises generating information defining the correspondence such that data corresponding to a first point associated with the first mesh transfers to correspond to a second point associated with the second mesh.

3.  The method of claim 1 wherein generating the correspondence between the first and second meshes comprises generating the correspondence based on one or more harmonic functions.

4.  The method of claim 1 wherein receiving the pair of feature curve networks comprises receiving one or more user-defined feature curves associated with the first or second feature curve networks.

5.  The method of claim 1 further comprising:

    transferring information associated with the first mesh to the second mesh based on the correspondence.

6.  The method of claim 5 wherein transferring the information between the first mesh and the second mesh comprises transferring one or more of articulation data, shader data, lighting data, simulation data, geometry, re-meshing information, or map information.

7.  The method of claim 1 wherein the second mesh comprises the first mesh.

8.  The method of claim 1 further comprising:

    updating an object in response to copying information associated with the first mesh to the second mesh based on the correspondence.

9.  The method of claim 1 wherein the at least a portion of the pair of feature curve networks is determined in response to the parameterization information comprising a UV set.

10. The method of claim 1 wherein the at least a portion of the pair of feature curve networks is determined in response to the parameterization information comprising one or more maps.

11. The method of claim 1 wherein the at least a portion of the pair of feature curve networks is determined in response parameterization information comprising harmonic parameterization.

12. The method of claim 1 wherein generating the correspondence comprises generating a set of maps.

13. A computer readable medium carrying computer code for controlling a computer to carry out the method of any preceding claim.

14. A system for generating correspondences for transferring information between objects, the system comprising:

    a processor; and
    a memory coupled to the processor, the memory configured to store a set of instructions which when executed by the processor become operational with the processor to carry out a method according to any one of claims 1 to 12.

**Patentansprüche**

1.  Computerimplementiertes Verfahren zum Erzeugen von Korrespondenzen zum Übertragen von Informationen zwischen Objekten, das Verfahren umfassend:

    Empfangen einer ersten Masche und einer zweiten Masche;

Empfangen eines Paars von Merkmalskurven-Netzwerken, assoziiert mit der ersten Masche und der zweiten Masche, mindestens eine Merkmalskurve in einem ersten Merkmalskurven-Netzwerk des Paars von Merkmalskurven-Netzwerken verfasst von einem Benutzer auf oder nahe der ersten Masche separat von der Geometrie der ersten Masche und in Kurvenkorrespondenz mit mindestens einer Merkmalskurve in dem zweiten Merkmalskurven-Netzwerk des Paars von Merkmalskurven-Netzwerken, verfasst auf oder nahe der zweiten Masche durch einen Benutzer separat von der Geometrie der zweiten Masche,

wobei mindestens eine Merkmalskurve in mindestens einem Merkmalskurven-Netzwerk des Paars von Merkmalskurven-Netzwerken durch einen Punkt definiert ist, der in dem Inneren einer mit einer der ersten Masche oder der zweiten Masche assoziierten Fläche liegt, oder

wobei mindestens ein Abschnitt der Merkmalskurven in mindestens einem Merkmalskurven-Netzwerk in dem Paar von Merkmalskurven-Netzwerken als Reaktion auf mindestens eine mit einer Oberfläche der ersten Masche oder der zweiten Masche assoziierten 2D-Parameterisierung bestimmt wird; und

Erzeugen einer Oberflächenkorrespondenz zwischen der mindestens einen Oberfläche der ersten Masche und mindestens einer Oberfläche der zweiten Masche basierend auf Kurvenkorrespondenzen zwischen Merkmalskurven in dem Paar von Merkmalskurven-Netzwerken,

wodurch eine vollständige Korrespondenz zwischen allen Punkten der Quellenmasche und allen Punkte der Zielmasche erzeugt wird.

2. Verfahren nach Anspruch 1, wobei Erzeugen der Korrespondenz zwischen der ersten und der zweiten Masche umfasst, Informationen zu erzeugen, die die Korrespondenz derart definieren, dass Daten korrespondierend mit einem ersten mit der ersten Masche assoziierten Punkt übertragen werden, um mit einem zweiten mit der zweiten Masche assoziierten Punkt zu korrespondieren.

3. Verfahren nach Anspruch 1, wobei Erzeugen der Korrespondenz zwischen der ersten und der zweiten Masche umfasst, die Korrespondenz basierend auf einer oder mehreren harmonischen Funktionen zu erzeugen.

4. Verfahren nach Anspruch 1, wobei Empfangen des Paars von Merkmalskurven-Netzwerken umfasst, eine oder mehrere benutzerdefinierte Merkmalskurven, die mit dem ersten oder dem zweiten Merkmalskurven-Netzwerk assoziiert sind, zu empfangen.

5. Verfahren nach Anspruch 1, ferner umfassend:

Übertragen von mit der ersten Masche assoziierten Informationen basierend auf der Korrespondenz an die zweite Masche.

6. Verfahren nach Anspruch 5, wobei Übertragen der Informationen zwischen der ersten Masche und der zweiten Masche umfasst, eines oder mehreres von Artikulationsdaten, Schattiererdaten, Beleuchtungsdaten, Simulationsdaten, Geometrie, Neuvermaschungsinformationen oder Karteninformationen zu übertragen.

7. Verfahren nach Anspruch 1, wobei die zweite Masche die erste Masche umfasst.

8. Verfahren nach Anspruch 1, ferner umfassend:

Aktualisieren eines Objekts als Reaktion auf Kopieren von mit der ersten Masche assoziierten Informationen zu der zweiten Masche basierend auf der Korrespondenz.

9. Verfahren nach Anspruch 1, wobei mindestens ein Abschnitt des Paars von Merkmalskurven-Netzwerken als Reaktion darauf, dass die Parameterisierungsinformationen einen UV-Satz umfassen, bestimmt wird.

10. Verfahren nach Anspruch 1, wobei der mindestens eine Abschnitt des Paars von Merkmalskurven-Netzwerken als Reaktion darauf, dass die Parameterisierungsinformationen eine oder mehrere Karten umfassen, bestimmt wird.

11. Verfahren nach Anspruch 1, wobei der mindestens eine Abschnitt des Paars von Merkmalskurven-Netzwerken als Reaktion darauf, dass die Parameterisierungsinformationen eine harmonische Parameterisierung umfassen, bestimmt wird.

12. Verfahren nach Anspruch 1, wobei Erzeugen der Korrespondenz umfasst, einen Satz von Karten zu erzeugen.

13. Computerlesbares Medium, das Computercode zum Steuern eines Computers zum Ausführen des Verfahrens nach einem der vorstehenden Ansprüche trägt.

14. System zum Erzeugen von Korrespondenzen zum Übertragen von Informationen zwischen Objekten, das System umfassend:

einen Prozessor; und
einen an den Prozessor gekoppelten Speicher, wobei der Speicher konfiguriert ist, einen Satz von Anweisungen zu speichern, die, wenn sie von dem Prozessor ausgeführt werden, mit dem Prozessor funktionsfähig werden, um ein Verfahren nach einem der Ansprüche 1 bis 12 auszuführen.

**Revendications**

1. Procédé, mis en oeuvre par ordinateur, de génération de correspondances pour transférer des informations entre des objets, le procédé comprenant les étapes ci-dessous consistant à :

recevoir une première maille et une seconde maille ;
recevoir une paire de réseaux de courbes de caractéristiques associés à la première maille et à la seconde maille, au moins une courbe de caractéristiques, dans un premier réseau de courbes de caractéristiques de la paire de réseaux de courbes de caractéristiques, étant créée par un utilisateur sur ou près de la première maille, indépendamment de la géométrie de la première maille, et en correspondance de courbes avec au moins une courbe de caractéristiques dans le second réseau de courbes de caractéristiques de la paire de réseaux de courbes de caractéristiques créée sur ou près de la seconde maille par un utilisateur indépendamment de la géométrie de la seconde maille ;
dans lequel au moins une courbe de caractéristiques, dans au moins un réseau de courbes de caractéristiques de la paire de réseaux de courbes de caractéristiques, est définie par un point qui se situe à l'intérieur d'une face associée à l'une parmi la première maille ou la seconde maille ; ou
dans lequel au moins une partie des courbes de caractéristiques, dans au moins un réseau de courbes de caractéristiques dans la paire de réseaux de courbes de caractéristiques, est déterminée en réponse à au moins un paramétrage 2D associé à une surface de la première maille ou de la seconde maille ; et
générer une correspondance de surfaces entre ladite au moins une surface de la première maille et au moins une surface de la seconde maille, sur la base de correspondances de courbes entre des courbes de caractéristiques dans la paire de réseaux de courbes de caractéristiques ;

moyennant quoi une correspondance totale est créée entre tous les points de la maille de source et tous les points de la maille de destination.

2. Procédé selon la revendication 1, dans lequel l'étape de génération de la correspondance entre les première et seconde mailles consiste à générer des informations définissant la correspondance de sorte que des données correspondant à un premier point associé à la première maille sont transférées afin qu'elles correspondent à un second point associé à la seconde maille.

3. Procédé selon la revendication 1, dans lequel l'étape de génération de la correspondance entre les première et seconde mailles consiste à générer la correspondance sur la base d'une ou plusieurs fonctions harmoniques.

4. Procédé selon la revendication 1, dans lequel l'étape de réception de la paire de réseaux de courbes de caractéristiques consiste à recevoir une ou plusieurs courbes de caractéristiques définies par l'utilisateur associées au premier ou au second réseau de courbes de caractéristiques.

5. Procédé selon la revendication 1, comprenant en outre l'étape ci-dessous consistant à :

transférer des informations associées à la première maille vers la seconde maille, sur la base de la correspondance.

6. Procédé selon la revendication 5, dans lequel l'étape de transfert des informations entre la première maille et la seconde maille consiste à transférer un ou plusieurs éléments parmi des données d'articulation, des données de nuances, des données d'éclairage, des données de simulation, des informations de géométrie, des informations de remaillage, ou des informations de carte.

**7.** Procédé selon la revendication 1, dans lequel la seconde maille comprend la première maille.

**8.** Procédé selon la revendication 1, comprenant en outre l'étape ci-dessous consistant à :

mettre à jour un objet en réponse à la copie d'informations associées à la première maille vers la seconde maille, sur la base de la correspondance.

**9.** Procédé selon la revendication 1, dans lequel ladite au moins une partie de la paire de réseaux de courbes de caractéristiques est déterminée en réponse au fait que les informations de paramétrage comportent un ensemble UV.

**10.** Procédé selon la revendication 1, dans lequel ladite au moins une partie de la paire de réseaux de courbes de caractéristiques est déterminée en réponse au fait que les informations de paramétrage comportent une ou plusieurs cartes.

**11.** Procédé selon la revendication 1, dans lequel ladite au moins une partie de la paire de réseaux de courbes de caractéristiques est déterminée en réponse au fait que les informations de paramétrage comportent un paramétrage harmonique.

**12.** Procédé selon la revendication 1, dans lequel l'étape de génération de la correspondance consiste à générer un ensemble de cartes.

**13.** Support lisible par ordinateur portant un code informatique destiné à commander à un ordinateur de mettre en oeuvre le procédé selon l'une quelconque des revendications précédentes.

**14.** Système destiné à générer des correspondances pour transférer des informations entre des objets, le système comportant :

un processeur ; et
une mémoire couplée au processeur, la mémoire étant configurée de manière à stocker un ensemble d'instructions qui, lorsqu'elles sont exécutées par le processeur, deviennent opérationnelles avec le processeur en vue de mettre en oeuvre un procédé selon l'une quelconque des revendications 1 à 12.

100

| OBJECT LIBRARY 120 | OBJECT MODELER 130 |

DESIGN COMPUTER 110

| OBJECT SIMULATOR 140 | OBJECT RENDERER 150 |

FIG. 1

FIG. 2

FIG. 3A

FIG. 3B

400

BEGIN — 410

RECEIVE INFORMATION SPECIFYING FIRST MESH OBJECT — 420

RECEIVE INFORMATION SPECIFYING SECOND MESH OBJECT — 430

GENERATE CORRESPONDENCE BETWEEN FIRST MESH AND SECOND MESH — 440

TRANSFER INFORMATION BETWEEN FIRST MESH AND SECOND MESH BASED ON CORRESPONDENCE — 450

END — 460

FIG. 4

FIG. 5

FIG. 6

700

BEGIN — 710

RECEIVE ONE OR MORE FEATURE CURVES ASSOCIATED WITH FIRST MESH — 720

GENERATE FIRST FEATURE CURVE NETWORK BASED ON FEATURE CURVES ASSOCIATED WITH FIRST MESH — 730

RECEIVE ONE OR MORE FEATURE CURVES ASSOCIATED WITH SECOND MESH — 740

GENERATE SECOND FEATURE CURVE NETWORK BASED ON FEATURE CURVES ASSOCIATED WITH SECOND MESH — 750

GENERATE CORRESPONDENCE BETWEEN FIRST MESH AND SECOND MESH USING PAIR OF FEATURE CURVE NETWORKS — 760

TRANSFER INFORMATION BETWEEN FIRST MESH AND SECOND MESH BASED ON CORRESPONDENCE — 770

END — 780

FIG. 7

FIG. 8A

FIG. 8B

FIG. 9A

FIG. 9B

1000

```
              BEGIN                    ⟩──⟲ 1010

   RECEIVE PAIR OF FEATURE CURVE NETWORKS ──⟲ 1020

   RECEIVE ONE OR MORE REFINEMENTS TO PAIR ──⟲ 1030
         OF FEATURE CURVE NETWORKS

      GENERATE CORRESPONDENCE BASED ON
     PAIR OF FEATURE CURVE NETWORKS AND  ──⟲ 1040
              REFINEMENTS

           STORE CORRESPONDENCE          ──⟲ 1050

              END                    ⟩──⟲ 1060
```

FIG. 10

FIG. 11A

FIG. 11B

1200

BEGIN 1210

RECEIVE FIRST MESH AND SECOND MESH 1220

RECEIVE PARAMETERIZATION INFORMATION 1230

GENERATE PAIR OF FEATURE CURVE
NETWORKS BASED ON PARAMETERIZATION
INFORMATION 1240

GENERATE CORRESPONDENCE BETWEEN
FIRST AND SECOND MESH USING PAIR OF
FEATURE CURVE NETWORKS 1250

END 1260

FIG. 12

1300

```
            ┌─────────────────────────────┐
            │            BEGIN            │  ── 1310
            └─────────────────────────────┘
                          │
                          ▼
            ┌─────────────────────────────┐
            │        RECEIVE MESH         │  ── 1320
            └─────────────────────────────┘
                          │
                          ▼
            ┌─────────────────────────────┐
            │       RECEIVE UV-SET        │  ── 1330
            └─────────────────────────────┘
                          │
                          ▼
            ┌─────────────────────────────┐
            │  RECEIVE ONE OR MORE USER-  │  ── 1340
            │   DEFINED FEATURE CURVES    │
            └─────────────────────────────┘
                          │
                          ▼
            ┌─────────────────────────────┐
            │ DETERMINE ONE OR MORE       │  ── 1350
            │ FEATURE CURVES BASED ON     │
            │ UV-SET                      │
            └─────────────────────────────┘
                          │
                          ▼
            ┌─────────────────────────────┐
            │ GENERATE FEATURE CURVE      │
            │ NETWORK BASED ON USER-      │  ── 1360
            │ DEFINED FEATURE CURVES AND  │
            │ FEATURES CURVES DETERMINED  │
            │ FROM UV-SET                 │
            └─────────────────────────────┘
                          │
                          ▼
            ┌─────────────────────────────┐
            │            END              │  ── 1370
            └─────────────────────────────┘
```

FIG. 13

1410

FIG. 14A

1420

FIG. 14B

1500

BEGIN — 1510

RECEIVE PAIR OF SURFACES — 1520

GENERATE SURFACE CORRESPONDENCE
BETWEEN PAIR OF SURFACES — 1530

GENERATE VOLUME CORRESPONDENCE
BASED ON SURFACE CORRESPONDENCE — 1540

END — 1550

FIG. 15

FIG. 16

EP 2 260 403 B1

FIG. 17

1800

BEGIN — 1810

RECEIVE COLLECTION OF MESHES — 1820

GENERATE CORRESPONDENCES BETWEEN PAIRS OF MESHES — 1830

COMBINE INFORMATION ASSOCIATED WITH PLURALITY OF MESHES BASED ON CORRESPONDENCES — 1840

END — 1850

FIG. 18

FIG. 19

FIG. 20

FIG. 21A

FIG. 21B

FIG. 21C

FIG. 22

**EP 2 260 403 B1**

**REFERENCES CITED IN THE DESCRIPTION**

**Patent documents cited in the description**

- US 61030796 A
- US 20070408 A
- US 20071908 A
- US 20072708 A
- US 20073908 A